# EUROPEAN PATENT SPECIFICATION

(11) **EP 2 657 049 B1**
(45) Date of publication and mention of the grant of the patent: **22.07.2015**
(21) Application number: 13163678.9
(22) Date of filing: 15.04.2013
(51) Int. Cl.: B60C 13/04

(54) **Pneumatic tire**
Luftreifen
Pneu

(30) Priority: 23.04.2012 JP 2012097933
(43) Date of publication of application: 30.10.2013
(73) Proprietor: SUMITOMO RUBBER INDUSTRIES, LTD., Kobe-shi, Hyogo 651-0072 (JP)
(72) Inventor: Tatsumi, Hiroyuki, Kobe-shi, Hyogo 651-0072 (JP)
(74) Representative: TBK

(56) References cited:
- EP-A1- 2 165 854
- JP-A- H0 616 017
- JP-A- 2007 176 267
- JP-A- 2007 196 988
- US-A- 5 992 487
- US-A1- 2007 151 649

## Description

### BACKGROUND OF THE INVENTION

### Field of the Invention

The present invention relates to pneumatic tires that allow reduction of rolling resistance while maintaining steering stability.

### Description of the Background Art

In recent years, reduction of rolling resistance of tires and improvement of fuel consumption performance of vehicles are required for energy saving. In general, about half the rolling resistance of a tire results in energy loss due to heat generation occurring in rubber portions of the tire. Therefore, pneumatic tires that allow reduction of rolling resistance of the tires by using a rubber material that allows reduction of energy loss due to heat generation, for sidewall portions that may be significantly deformed, have been suggested to date.

However, in such pneumatic tires, stiffness of the sidewall portions is reduced and steering stability is deteriorated, and further durability may be deteriorated in the sidewall portions.

In order to address such a problem, in Japanese Laid-Open Patent Publication No. 2007-196988, a pneumatic tire is suggested in which two layers of sidewall rubbers are used and a complex elastic modulus E* and a loss tangent tanδ of a rubber composition of each of an inner layer and an outer layer are specified to enable reduction of rolling resistance while ensuring durability of sidewall portions.

Furthermore, a pneumatic tire according to the preamble of claim 1 is known from US 2007/151 649 A1.

However, in the pneumatic tire described above, there is room for increased improvement in maintaining steering stability and reducing rolling resistance.

### SUMMARY OF THE INVENTION

The present invention is made in order to solve the aforementioned problems, and a principal object of the present invention is to make available a pneumatic tire that has a fundamental structure in which a complex elastic modulus E* and a loss tangent tanδ of a rubber composition of each of an inner layer and an outer layer which form a sidewall rubber are specified and thicknesses of the inner layer and the outer layer are specified, to enable both steering stability and rolling resistance performance to be obtained at high levels.

According to the present invention, the above object is solved with a pneumatic tire having the features of claim 1. Further embodiments are laid down in the dependent claims.

In the description herein, the complex elastic modulus E* and the loss tangent tanδ of a rubber indicate values measured, according to the standards of JIS-K6394, by a viscoelasticity spectrometer manufactured by Iwamoto Seisakusho, under the following conditions.
Initial strain: 10%
Amplitude: ±2%
Frequency: 10 Hz
Deformation mode: tension
Measurement temperature: 70°C

In the pneumatic tire of the present invention, the sidewall rubbers each include the inner layer and the outer layer that extend inward and outward in the tire radial direction. The outer layer is formed of a rubber composition having a complex elastic modulus E* higher than a rubber composition of the inner layer. The inner layer is formed of the rubber composition having a loss tangent tanδ lower than the rubber composition of the outer layer. Such sidewall rubbers enable reduction of energy loss due to heat generation while ensuring stiffness of the sidewall portions.

Further, the inner layer has a thickness that is gradually reduced inward in the tire radial direction from the maximum width position of each sidewall portion, and that is gradually increased outward in the tire radial direction, from the maximum width position, at least to the outer end, in the tire radial direction, of the outer layer. Further, the outer layer has a thickness that is gradually increased inward in the tire radial direction, from the maximum width position, at least to the inner end, in the tire radial direction, of the inner layer. In such sidewall rubbers, stiffness is increased in inner regions, in the tire radial direction, of the sidewall portions, that is, a region that greatly contributes to steering stability and contributes less to rolling resistance. Further, in the sidewall rubbers, heat generation is reduced in outer regions, in the tire radial direction, of the sidewall portions, that is, a region that contributes less to steering stability and greatly contributes to rolling resistance. Thus, rolling resistance can be reduced while steering stability is maintained, with enhanced effectiveness.

### BRIEF DESCRIPTION OF THE DRAWINGS

FIG. 1 is a cross-sectional view of a pneumatic tire according to one embodiment of the present invention; and
FIG. 2 is an enlarged cross-sectional view of a sidewall portion and a bead shown in FIG 1.

### DESCRIPTION OF THE PREFERRED EMBODIMENTS

Hereinafter, one embodiment of the present invention will be described with reference to the drawings.

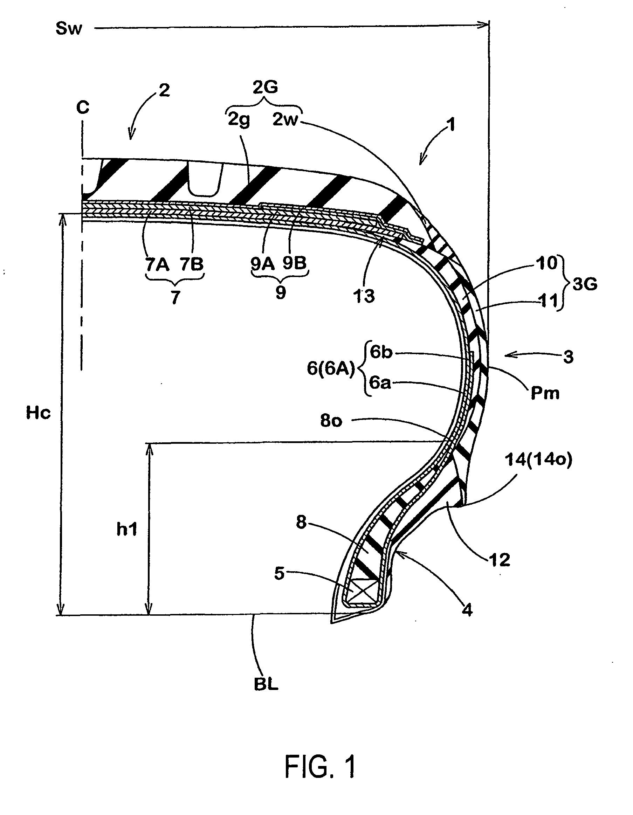

FIG. 1 is a tire-meridian cross-sectional view of a pneumatic tire 1, in a normal state, including a tire rotation axis, according to the present embodiment. In the description herein, the normal state represents a state in which a tire is mounted to a normal rim (not shown) and is inflated to a normal internal pressure, and no load is applied to the tire. Hereinafter, unless otherwise specified, dimensions of components of the tire, and the like are represented as values measured in the normal state.

Further, the "normal rim" described above represents a rim that is defined, in a standard system including a standard with which the tire complies, by the standard for each tire, and includes, for example, the "standard rim" in the JATMA standard, the "Design Rim" in the TRA standard, and the "Measuring Rim" in the ETRTO standard.

Further, the "normal internal pressure" represents an air pressure that is defined, in a standard system including a standard with which the tire complies, by the standard for each tire, and includes the "maximum air pressure" in the JATMA standard, the maximum value recited in the table "TIRE LOAD LIMITS AT VARIOUS COLD INFLATION PRESSURES" in the TRA standard, and the "INFLATION PRESSURE" in the ETRTO standard.

As shown in FIG. 1, the pneumatic tire (hereinafter, may be referred to merely as a "tire") 1 of the present embodiment includes: a carcass 6 extending from a tread portion 2 via sidewall portions 3 to bead cores 5 of bead portions 4; sidewall rubbers 3G disposed in the sidewall portions 3 outward of the carcass 6 in the tire axial direction; bead apex rubbers 8 extending from the bead cores 5, respectively, outward in the tire radial direction; a belt layer 7 disposed outward of the carcass 6 and inward of the tread portion 2 in the tire radial direction; and a band layer 9 disposed outward of the belt layer 7 in the tire radial direction. In the present embodiment, a pneumatic tire for use in passenger cars will be described.

The carcass 6 is formed as, for example, one carcass ply, i.e., a carcass ply 6A. The carcass ply 6A includes a body portion 6a that extends from the tread portion 2 via the sidewall portions 3 to the bead cores 5 of the bead portions 4; and wound-up portions 6b that are connected to the body portion 6a, are wound up around the bead cores 5, respectively, from the inner side to the outer side in the tire axial direction, and extend outward in the tire radial direction. Further, for the carcass ply 6A, organic fiber cords such as aromatic polyamide cords or rayon cords are used as carcass cords. The carcass cords are disposed at an angle ranging, for example, from 70° to 90° relative to the tire equator C.

In the present embodiment, the belt layer 7 is formed such that two belt plies 7A and 7B each having belt cords diagonal to the tire equator C by an angle ranging, for example, from 15° to 45° are layered in the tire radial direction so as to cross the belt cords. For the belt cords, for example, aramid cords or rayon cords are used, and other than them, steel cords are suitably used.

The band layer 9 is formed of, for example, band plies each having band cords disposed at an angle of 5° or less relative to the tire circumferential direction. Further, in the present embodiment, the band layer 9 includes: a pair of left and right edge band plies 9A that covers only outer end portions, in the tire axial direction, of the belt layer 7; and a full band ply 9B that covers almost the entire width of the belt layer 7. As the band cords, for example, organic fiber cords such as nylon cords, aramid cords, or PEN cords are suitably used.

In the tread portion 2, a tread rubber 2G is provided outward of the belt layer 7 in the tire radial direction, and has a width greater than the belt layer 7. For example, the tread rubber 2G includes: a tread rubber body 2g disposed outward of the belt layer 7 in the tire radial direction and forming a ground-contact surface; and wing rubbers 2W disposed lateral to both ends of the tread rubber body 2g and each having a roughly triangular cross-section.

Since the wing rubbers 2W are disposed mainly outside the ground-contact surface, the wing rubbers 2W are advantageously formed of a rubber softer than that of the tread rubber body 2g. Further, a complex elastic modulus E*w of each wing rubber 2W is preferably higher than or equal to 2.8 MPa and more preferably higher than or equal to 3.1 MPa, and is preferably not higher than 3.8 MPa and more preferably not higher than 3.5 MPa. Thus, a difference in stiffness between the tread portion 2 and the sidewall portions 3 is reduced.

Further, when a loss tangent tanδw of each wing rubber 2W is reduced, heat generation performance is deteriorated and running performance may be deteriorated in cold climates. When the loss tangent tanδw is increased, rolling resistance may be increased. From this viewpoint, the loss tangent tanδw is preferably higher than or equal to 0.168 and more preferably higher than or equal to 0.172, and is preferably not higher than 0.185 and more preferably not higher than 0.181.

The bead apex rubbers 8 are formed of a hard rubber, are disposed between the body portion 6a and the wound-up portions 6b, respectively, of the carcass ply 6A, and extend from the bead cores 5, respectively, outward in the tire radial direction so as to be tapered. Thus, the bead portions 4 and the sidewall portions 3 are reinforced.

Further, from the viewpoint that the bead portions 4 and the sidewall portions 3 are effectively reinforced, a height h1, in the tire radial direction, from a bead baseline BL to an outer end 8o of each bead apex rubber 8 is advantageously set so as to be, for example, 38% to 46% of a carcass height Hc from the bead baseline BL to an outer **surface** of the carcass 6 on the tire equator C.

Further, a complex elastic modulus E*b of each bead apex rubber 8 is set so as to range, for example, from 12 MPa to 20 MPa. Thus, a stiffness required for the bead portions 4 is assuredly obtained.

The bead portions 4 have clinch rubbers 12 disposed, outward of the carcass 6 in the tire axial direction, in contact with the wound-up portions 6b, respectively.

The clinch rubbers 12 are formed of a hard rubber, thereby ensuring stiffness of the bead portions 4. When a complex elastic modulus E*c of each clinch rubber 12 is reduced, durability of the bead portions 4 may be deteriorated. When the complex elastic modulus E*c of each clinch rubber 12 is increased, ride comfort may be deteriorated. From this viewpoint, the complex elastic modulus E*c is preferably higher than or equal to 9 MPa and more preferably higher than or equal to 12 MPa, and is preferably not higher than 21 MPa and more preferably not higher than 18 MPa.

Further, on the outer surface of each bead portion 4, a rim protector 14 that projects outward in the tire axial direction is provided.

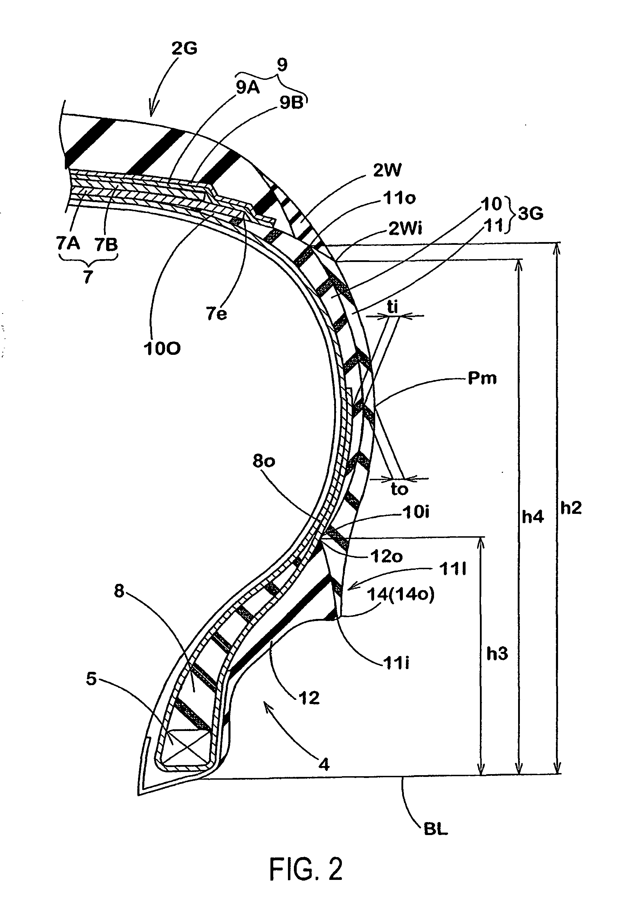

FIG. 2 is an enlarged cross-sectional view of the sidewall portion 3 and the bead portion 4. As shown in FIG. 2, in the sidewall portions 3, each sidewall rubber 3G includes an inner layer 10 that extends outward and inward in the tire radial direction, and an outer layer 11 disposed outward of the inner layer 10 in the tire axial direction. In the present embodiment, each sidewall rubber 3G is formed of these two layers.

The outer layer 11 is formed of a rubber composition having a complex elastic modulus E* higher than a rubber composition of the inner layer 10. Thus, stiffness is ensured in the sidewall portions 3, thereby enabling improvement of steering stability. On the other hand, when a value of a complex elastic modulus E*o of the outer layer 11 is reduced, an effect of improving steering stability may not be obtained. When a value of the complex elastic modulus E*o of the outer layer 11 is increased, ride comfort may be deteriorated. From this viewpoint, the complex elastic modulus E*o is preferably higher than or equal to 4.2 MPa and more preferably higher than or equal to 4.4 MPa, and is preferably not higher than 5.0 MPa and more preferably not higher than 4.8 MPa.

A thickness to of the outer layer 11 is gradually increased inward in the tire radial direction from a maximum width position Pm of each sidewall portion 3, at least to an inner end 10i, in the tire radial direction, of the inner layer 10. A side portion region of each bead portion, which is positioned inward of the maximum width position Pm in the tire radial direction, greatly contributes to steering stability but contributes less to rolling resistance. Therefore, when the thickness to of the outer layer 11 having a high complex elastic modulus E* is gradually increased inward in the tire radial direction from the maximum width position Pm, steering stability can be improved without increasing rolling resistance.

The inner layer 10 is formed of the rubber composition having a loss tangent tanδ lower than the rubber composition of the outer layer 11. Thus, energy loss due to heat generation in the sidewall portions 3 is reduced, thereby reducing rolling resistance. On the other hand, when a value of a loss tangent tanδi of the inner layer 10 is reduced, a temperature of the sidewall portions 3 does not rise up to an appropriate temperature during running particularly in cold climates, and ride comfort may be deteriorated. When the value of the loss tangent tanδi of the inner layer 10 is increased, rolling resistance may be increased. From this viewpoint, the loss tangent tanδi is set so as to be preferably higher than or equal to 0.081 and more preferably higher than or equal to 0.091, and be preferably not higher than 0.121 and more preferably not higher than 0.111.

A thickness ti of the inner layer 10 is gradually reduced inward in the tire radial direction from the maximum width position Pm. The inner layer 10 having been thus formed allows a rubber volume of the outer layer 11 to be increased in a region inward of the maximum width position Pm in the tire radial direction, thereby contributing to improvement of steering stability.

Further, the thickness ti of the inner layer 10 is gradually increased outward in the tire radial direction from the maximum width position Pm, at least to an outer end 11o, in the tire radial direction, of the outer layer 11. Side portion regions of the tread portion, which are positioned outward of the maximum width position Pm in the tire radial direction, greatly contribute to rolling resistance but contribute less to steering stability. Therefore, when the thickness of the inner layer 10 having a low loss tangent tanδ is gradually increased outward in the tire radial direction from the maximum width position Pm, rolling resistance can be reduced without deteriorating steering stability. Thus, in the pneumatic tire 1 of the present invention, the inner layer 10 and the outer layer 11 that are formed of rubber compositions, respectively, having different characteristics are disposed such that the thicknesses thereof are set so as to be different from each other according to regions, to obtain both steering stability and rolling resistance performance at high levels.

In order to further enhance such effects, the loss tangent tanδo of the outer layer 11 is preferably higher than or equal to 0.141 and more preferably higher than or equal to 0.144, and is preferably not higher than 0.153 and more preferably not higher than 0.150. When the loss tangent tanδo is reduced, a temperature of the sidewall portions 3 does not rise up to an appropriate temperature during running particularly in cold climates, and ride comfort may be deteriorated. When the loss tangent tanδo is increased, rolling resistance may be increased.

Further, the outer layer 11 advantageously extends inward in the tire radial direction so as to cover an outer side portion, in the tire axial direction, of the clinch rubber 12. Moreover, an inner end portion 11I, in the tire radial direction, of the outer layer 11 advantageously has a thickness gradually reduced inward in the tire radial direction from the inner end 10i, in the tire radial direction, of the inner layer 10. Thus, an area in which the outer layer 11 and the clinch rubber 12 are joined to each other is increased, and stiffness distribution becomes uniform between the sidewall portions 3 and the bead portions 4, thereby enabling improvement of steering stability and ride comfort.

An inner end 11i of the outer layer 11 is advantageously positioned at a maximally-projecting portion 14o of the rim protector 14. Thus, the area in which the outer layer 11 and the clinch rubber 12 are joined to each other is further increased, and separation of the rubber in the outer layer 11 can be restrained as well as stiffness distribution becomes uniform.

It is advantageous that the thickness to of the outer layer 11 is almost constant in a region that extends outward in the tire radial direction from the maximum width position Pm to an inner end 2Wi, in the tire radial direction, of the wing rubber 2W. In the region, deformation of the sidewall portions 3 is great. Therefore, when the thickness to is set so as to be almost constant, stress concentration can be prevented, and further damage such as separation of rubber or the like can be restrained.

The thickness to is gradually reduced outward in the tire radial direction in a region that extends, outward in the tire radial direction, from the inner end 2Wi of the wing rubber 2W. Thus, difference in stiffness between the outer layer 11 and the wing rubber 2W is reduced, and damage such as separation of rubber or the like is restrained, and further wandering performance can be improved.

The outer end 11o, in the tire radial direction, of the outer layer 11 is positioned, under the tread rubber 2G, outward of an outer end 7e of the belt layer 7 in the tire axial direction. Thus, stiffness of end portions, in the tire axial direction, of the tread portion 2 is made appropriate, thereby enabling improvement of wandering performance. Further, the outer end 11o is advantageously positioned inward of the wing rubber 2W in the tire radial direction. Thus, separation of rubber in the outer layer 11 is restrained, thereby improving durability of the tire.

Further, when a height h2 to the outer end 11o of the outer layer 11 from the bead baseline BL is reduced, steering stability may be deteriorated, and further durability of the tread portion 2 may be deteriorated. On the other hand, when the height h2 is increased, rolling resistance may be increased, and further ride comfort may be deteriorated. From this viewpoint, the height h2 is preferably greater than or equal to 87% of the carcass height Hc that is the maximum height of the carcass 6 and more preferably greater than or equal to 88.5% thereof, and is preferably not greater than 93% thereof and more preferably not greater than 91.5% thereof.

When a complex elastic modulus E*i of the inner layer 10 is reduced, steering stability may be deteriorated. When the complex elastic modulus E*i is increased, ride comfort may be deteriorated. From this viewpoint, the complex elastic modulus E*i is preferably higher than or equal to 2.7 MPa and more preferably higher than or equal to 3.0 MPa, and is preferably not higher than 4.1 MPa and more preferably not higher than 3.8 MPa.

An outer end portion 10O, in the tire radial direction, of the inner layer 10 is advantageously positioned in a belt end region 13 between the carcass 6 and the belt layer 7. Thus, difference in stiffness between the tread portion 2 and the sidewall portions 3 is reduced, and further separation of the belt layer 7 is restrained, thereby enabling improvement of durability of the tread.

Furthermore, the outer end portion 10O of the inner layer 10 advantageously has a thickness gradually reduced from the outer end 11o of the outer layer 11. Thus, the belt layer 7 is allowed to linearly extend from the tire equator toward tread end potions, thereby enabling improvement of steering stability and ride comfort.

The inner end 10i, in the tire radial direction, of the inner layer 10 is advantageously positioned close to the outer end 8o, in the tire radial direction, of each bead apex rubber 8. In the description herein, the "close to" indicates that a distance in each of the tire radial direction and the tire axial direction between the inner end 10i of the inner layer 10 and the outer end 8o of the bead apex rubber 8 is less than or equal to 10 mm, more preferably less than or equal to 5 mm, and even more preferably 0, that is, the position of the inner end 10i and the position of the outer end 8o even more preferably coincide with each other. Thus, stiffness distribution in regions from the bead portions 4 to the sidewall portions 3 becomes uniform, thereby enabling improvement of steering stability and ride comfort.

Further, from the viewpoint that the stiffness distribution is made uniform, it is advantageous that the clinch rubber 12 has a thickness gradually reduced outward in the tire radial direction from the maximally-projecting portion 14o of the rim protector 14, and an outer end 12o, in the tire radial direction, of the clinch rubber 12 is close to the inner end 10i of the inner layer 10. In the description herein, the "close to" indicates, similarly to the above description, that a distance in each of the tire radial direction and the tire axial direction between the outer end 12o of the clinch rubber 12 and the inner end 10i of the inner layer 10 is less than or equal to 10 mm, more preferably less than or equal to 5 mm, and even more preferably 0, that is, the position of the outer end 12o and the position of the inner end 10i coincide with each other.

Further, when a height h3 to the inner end 10i, in the tire radial direction, of the inner layer 10 from the bead baseline BL is reduced, a rubber volume of the outer layer 11 is reduced, and steering stability may be deteriorated. On the other hand, when the height h3 is increased, a rubber volume of the inner layer 10 is reduced, and rolling resistance may be increased. From this viewpoint, the height h3 is preferably greater than or equal to 35% of the carcass height Hc and more preferably greater than or equal to 37% thereof, and is preferably not greater than 45% thereof and more preferably not greater than 43% thereof.

The inner layer 10 and the outer layer 11 are advantageously disposed outward of each wound-up portion 6b of the carcass ply 6A in the tire axial direction and thus separated from the bead apex rubber 8. Thus, stiffness of the bead portions 4 is increased, and steering stability is improved and further durability of the bead apex rubbers 8 is improved to restrain the tire from being misaligned with a rim.

At the maximum width position Pm, each sidewall rubber 3G contributes to steering stability and rolling resistance almost to the same degree. Therefore, at the maximum width position Pm, a ratio to/ti of the thickness to of the outer layer 11 to the thickness ti of the inner layer 10 is preferably greater than or equal to 80% and more preferably greater than or equal to 90%, and is preferably not greater than 120% and more preferably not greater than 110%. Further, the ratio to/ti is even more preferably 100%, that is, the thickness ti is even more preferably equal to the thickness to. Thus, the thickness ti and the thickness to are close to each other, thereby enabling both steering stability and rolling resistance performance to be obtained at high levels.

Further, it is advantageous that the ratio to/ti is gradually reduced in a region outward of the maximum width position Pm in the tire radial direction. Thus, stiffness distribution in the region is made appropriate, thereby enabling improvement of steering stability and ride comfort. Further, the ratio to/ti at the inner end 2Wi, in the tire radial direction, of each wing rubber 2W is preferably greater than or equal to 33% and more preferably greater than or equal to 38%, and is preferably not greater than 53% and more preferably not greater than 48%. Thus, separation of the band layer 9 is restrained, and further wandering performance can be improved.

When a height h4 to the inner end 2Wi of each wing rubber 2W from the bead baseline BL in the tire radial direction is increased, stiffness of the end portions, in the tire axial direction, of the tread portion 2 is increased, and wandering performance may be deteriorated. On the other hand, when the height h4 is reduced, steering stability may be deteriorated, and further separation of rubber in the wing rubbers 2W may occur. From this viewpoint, the height h4 is preferably greater than or equal to 80% of the carcass height Hc and more preferably greater than or equal to 83% thereof, and is preferably not greater than 90% thereof and more preferably not greater than 87% thereof.

Although the tire, of the present invention, for use in passenger cars has been described above in detail, it should be understood that the present invention is not limited to the specific embodiment described above, and various modifications can be made to implement the present invention.

### [Examples]

Tires, for use in passenger cars, having a size of 205/55R16 and the fundamental structure shown in FIG. 1 were manufactured based on the specifications indicated in Table 1. Tests for lateral stiffness and rolling resistance were made for each sample tire. Further, tests for tires each having an outer layer and an inner layer which are formed of the same rubber composition were similarly made for comparative examples. The test method was as follows.

### <Rolling resistance>

A rolling resistance of each sample tire was measured by means of a rolling resistance tester under the following conditions. The results are indicated as indexes based on the reciprocal of a value of a rolling resistance of Comparative Example 8 being 100. The greater a value of the index is, the less the rolling resistance is.
Mounted rim: 16x6.5JJ
Internal pressure: 210 kPa
Vertical load: 4.83 kN

### <Lateral stiffness>

A lateral stiffness of each sample tire was measured by means of a static tester under the following conditions. The results are indicated as indexes based on a lateral stiffness of Comparative Example 8 being 100. The greater a value of the index is, the higher the lateral stiffness is, that is, the more excellent steering stability is.
Mounted rim: 16x6.5JJ
Internal pressure: 230 kPa
Vertical load: 4.24 kN

The results are indicated in Table 1. Further, blending ratios of rubber compositions are indicated in detail in Table 2.

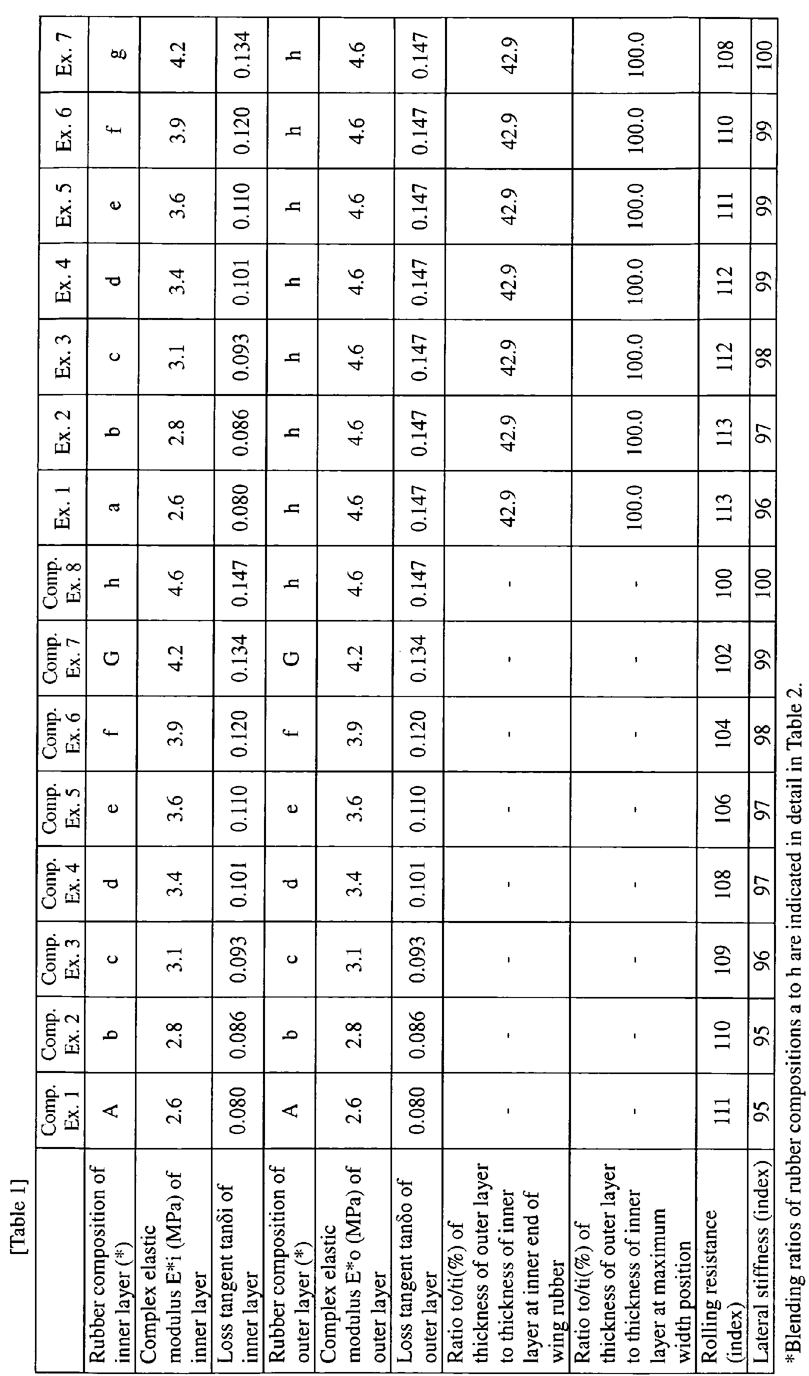

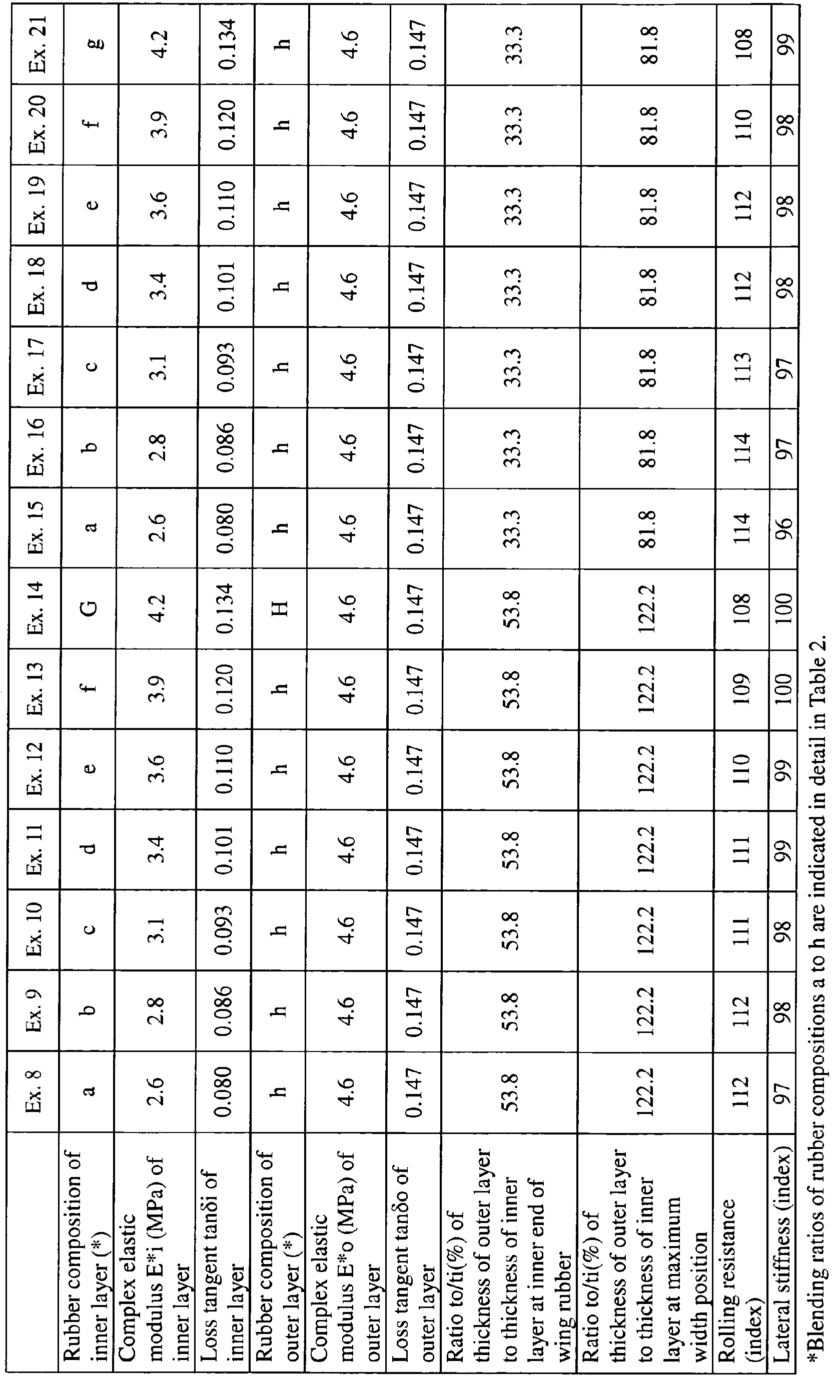

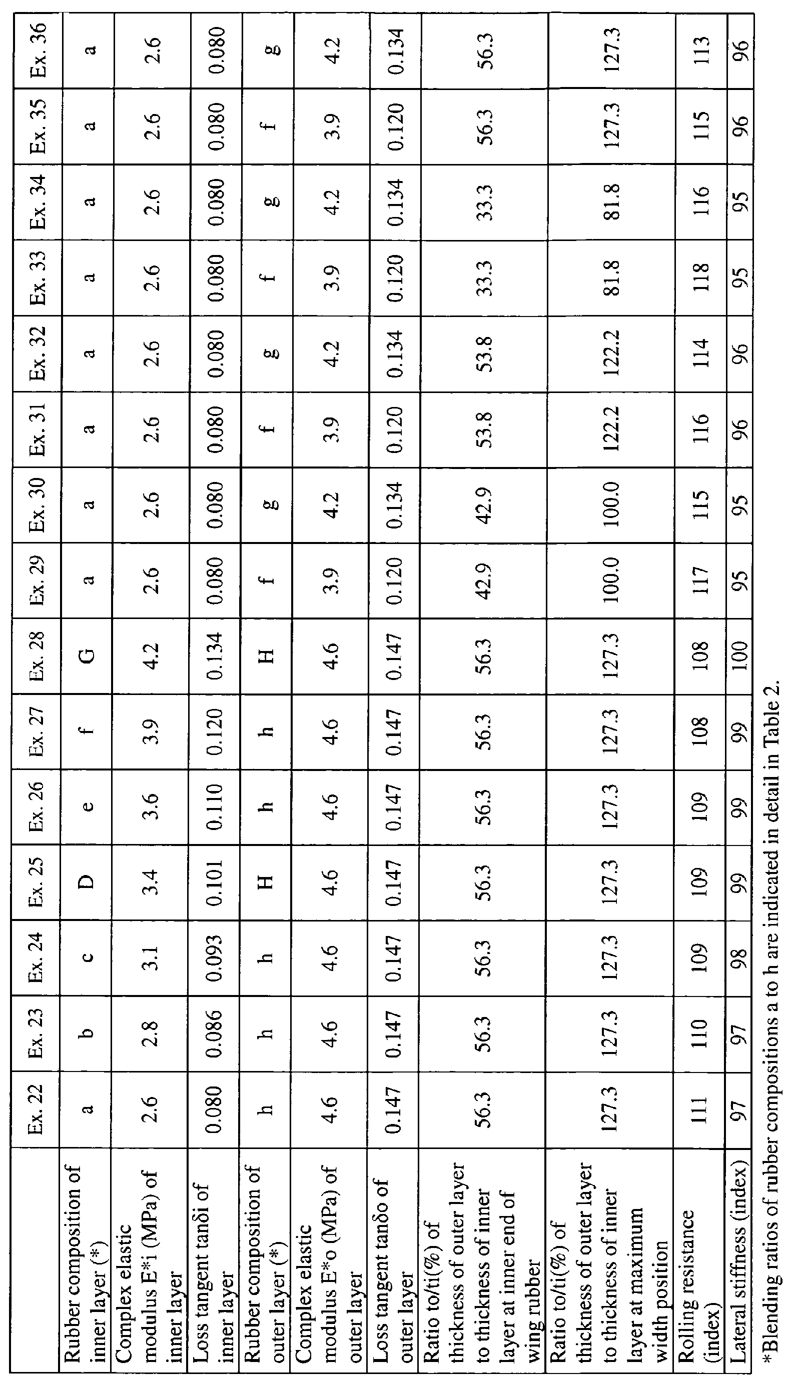

**[Table 2]**

| (values are indicated as "parts by mass") | | | | | | | | |
|---|---|---|---|---|---|---|---|---|
| | Rubber composition a | Rubber composition b | Rubber composition c | Rubber composition d | Rubber composition e | Rubber composition f | Rubber composition g | Rubber composition h |
| Natural rubber | 47.5 | 47.0 | 46.0 | 45.0 | 44.0 | 43.0 | 42.0 | 40.0 |
| Butadiene rubber | 37.0 | 39.0 | 42.0 | 45.0 | 48.0 | 51.0 | 55.0 | 60.0 |
| Carbon | 26.0 | 29.0 | 33.0 | 37.0 | 40.0 | 45.0 | 52.0 | 60.0 |
| Oil | 5.25 | 5.2 | 5.1 | 5.0 | 4.9 | 4.8 | 4.6 | 4.3 |
| ESCOREZ (registered trademark) resin | 5.2 | 4.9 | 4.5 | 4.0 | 3.5 | 3.0 | 2.0 | 1.0 |
| Wax | 1.2 | 1.2 | 1.2 | 1.2 | 1.2 | 1.2 | 1.2 | 1.2 |
| Anti-aging agent | 3.0 | 3.0 | 3.0 | 3.0 | 3.0 | 3.0 | 3.0 | 3.0 |
| Zinc oxide | 4.8 | 4.6 | 4.3 | 4.0 | 3.7 | 3.4 | 3.0 | 2.5 |
| Sulfur | 2.75 | 2.63 | 2.49 | 2.33 | 2.18 | 2.01 | 1.81 | 1.58 |
| Vulcanization accelerator | 0.66 | 0.68 | 0.71 | 0.75 | 0.78 | 0.82 | 0.87 | 0.94 |
| Stearic acid | 1.75 | 1.8 | 1.9 | 2.0 | 2.1 | 2.2 | 2.3 | 2.5 |

As is apparent from Table 1, it can be confirmed that rolling resistance performance is significantly improved while maintaining lateral stiffness in the pneumatic tires of Examples as compared to Comparative Examples.

A pneumatic tire is provided which allows both steering stability and rolling resistance performance to be obtained at high levels.

A pneumatic tire 1 includes a carcass 6 and sidewall rubbers 3G. Each sidewall rubber 3G includes an inner layer 10 and an outer layer 11. The outer layer 11 has a complex elastic modulus E* higher than the inner layer 10. The inner layer 10 has a loss tangent tanδ lower than the outer layer 11. The inner layer 10 has a thickness that is gradually reduced inward in the tire radial direction from a maximum width position Pm of a sidewall portion 3, and that is gradually increased outward in the tire radial direction from the maximum width position Pm. The outer layer 11 has a thickness that is gradually increased inward in the tire radial direction from the maximum width position Pm.

## Claims

1. A pneumatic tire (1) that includes a carcass (6) extending from a tread portion (2) via sidewall portions (3) to bead cores (5) of bead potions (4), and sidewall rubbers (3G) disposed, in the sidewall portions, outward of the carcass in a tire axial direction, wherein
in a tire-meridian cross-section including a tire rotation axis of the tire that is in a normal state in which the tire is mounted to a normal rim and is inflated to a normal internal pressure, and no load is applied to the tire,
the sidewall rubbers each include an inner layer (10) extending inward and outward in a tire radial direction, and an outer layer (11) disposed outward of the inner layer in the tire axial direction,
the outer layer is formed of a rubber composition having a complex elastic modulus E* higher than that of the inner layer,
the inner layer is formed of a rubber composition having a loss tangent tanδ lower than that of the outer layer, and
the outer layer has a thickness that is gradually increased inward, in the tire radial direction, from the maximum width position, at least to an inner end (10i), in the tire radial direction, of the inner layer, **characterized in that**
the inner layer has a thickness that is gradually reduced inward, in the tire radial direction, from a maximum width position (Pm) of each sidewall portion, and that is gradually increased outward, in the tire radial direction, from the maximum width position, at least to an outer end (11o), in the tire radial direction, of the outer layer.

2. The pneumatic tire according to claim 1, wherein
a belt layer (7) is disposed, in the tread portion, outward of the carcass in the tire radial direction, and
an outer end portion (10O), in the tire radial direction, of the inner layer is disposed in a belt end region (13) between the carcass and the belt layer.

3. The pneumatic tire according to claim 2, wherein the outer end portion of the inner layer has a thickness that is gradually reduced from the outer end, in the tire radial direction, of the outer layer.

4. The pneumatic tire according to one of claims 1 to 3, wherein
the belt layer is disposed, in the tread portion, outward of the carcass in the tire radial direction, and the tread portion includes a tread rubber (2G) that is disposed outward of the belt layer in the tire radial direction and that has a width greater than that of the belt layer, and
the outer end of the outer layer is positioned outward of an outer end (7e) of the belt layer in the tire axial direction and inward of the tread rubber.

5. The pneumatic tire according to claim 4, wherein
the tread rubber includes a tread rubber body (2g) disposed outside the belt layer, and wing rubbers (2W) that are disposed lateral to both ends of the tread rubber body, that are softer than the tread rubber body, and that have roughly triangular cross-sections, and
the outer end of the outer layer is positioned inward of each wing rubber in the tire radial direction.

6. The pneumatic tire according to one of claims 1 to 5, wherein
the carcass is formed of a carcass ply (6A) that includes a body portion (6a) that extends from the tread portion via the sidewall portions to the bead cores, and wound-up portions (6b) that are connected to the body portion, and are wound up around the bead cores, respectively, from an inner side to an outer side in the tire axial direction, to extend outward in the tire radial direction,
the bead portions include bead apex rubbers (8) that extend from the bead cores outward in the tire radial direction, between the body portion and the wound-up portions, so as to be tapered, and
the inner layer and the outer layer are disposed outward of each wound-up portion in the tire axial direction, to be separated from each bead apex rubber.

7. The pneumatic tire according to claim 6, wherein the inner end, in the tire radial direction, of the inner layer is positioned close to an outer end (8o), in the tire radial direction, of each bead apex rubber.

8. The pneumatic tire according to one of claims 1 to 7, wherein
the bead portions have clinch rubbers (12) that are formed of a hard rubber, and that are disposed, outward of the carcass in the tire axial direction, in contact with the wound-up portions, respectively, and
each clinch rubber has a thickness that is gradually reduced outward in the tire radial direction from a maximally-projecting portion (14o) of a rim protector (14), and an outer end (12o), in the tire radial direction, of each clinch rubber is positioned close to the inner end, in the tire radial direction, of the inner layer.

9. The pneumatic tire according to claim 8, wherein
the outer layer extends inward in the tire radial direction so as to cover an outer side portion, in the tire axial direction, of each clinch rubber, and
an inner end portion (11I), in the tire radial direction, of the outer layer has a thickness that is gradually reduced inward in the tire radial direction from the inner end of the inner layer.

10. The pneumatic tire according to one of claims 1 to 9, wherein
rim protectors (14) are provided on outer surfaces of the bead portions, respectively, so as to project outward in the tire axial direction, and
an inner end (11i), in the tire radial direction, of the outer layer is positioned at the maximally-projecting portion (14o) of each rim protector.

## Patentansprüche

1. Luftreifen (1), der eine Karkasse (6), die sich von einem Profilabschnitt (2) über Seitenwandabschnitte (3) zu Wulstkernen (5) von Wulstabschnitten (4) erstrecken, und Seitenwandgummis (3G) aufweist, die in den Seitenwandabschnitten in einer Reifenachsrichtung außerhalb der Karkasse angeordnet sind, wobei
in einem Reifenmeridianquerschnitt, der eine Reifenrotationsachse des Reifens aufweist, der sich in einem normalen Zustand befindet, in dem der Reifen an einer normalen Felge montiert ist und mit einem normalen Innendruck befüllt ist und keine Last auf den Reifen aufgebracht ist,
die Seitenwandgummis jeweils eine innere Schicht (10), die sich in einer Reifenradialrichtung einwärts und auswärts erstreckt, und eine äußere Schicht (11) aufweisen, die in der Reifenachsrichtung außerhalb der inneren Schicht angeordnet ist,
wobei die äußere Schicht aus einer Gummizusammensetzung ausgebildet ist, die einen komplexen Elastizitätsmodul E* hat, der höher als jener der inneren Schicht ist,
die innere Schicht aus einer Gummizusammensetzung ausgebildet ist, die einen Verlustfaktor tanδ hat, der niedriger als jener der äußeren Schicht ist, und
wobei die äußere Schicht eine Dicke hat, die in der Reifenradialrichtung von der Maximalbreitenposition zumindest zu einem in der Reifenradialrichtung inneren Ende (10i) der inneren Schicht einwärts allmählich zunimmt, **dadurch gekennzeichnet, dass**
die innere Schicht eine Dicke hat, die von einer Maximalbreitenposition (Pm) eines jeden Seitenwandabschnitts in der Reifenradialrichtung einwärts allmählich abnimmt, und die von der Maximalbreitenposition zumindest zu einem in der Reifenradialrichtung äußeren Ende (11o) der äußeren Schicht in der Reifenradialrichtung auswärts allmählich zunimmt.

2. Luftreifen gemäß Anspruch 1, wobei
eine Gurtschicht (7) in dem Profilabschnitt in der Reifenradialrichtung außerhalb der Karkasse angeordnet ist, und
ein in der Radialrichtung äußerer Endabschnitt (10O) der inneren Schicht in einem Gurtendbereich (13) zwischen der Karkasse und der Gurtschicht angeordnet ist.

3. Luftreifen gemäß Anspruch 2, wobei der äußere Endabschnitt der inneren Schicht eine Dicke hat, die von dem in der Reifenradialrichtung äußeren Ende der äußeren Schicht allmählich abnimmt.

4. Luftreifen gemäß einem der Ansprüche 1 bis 3, wobei die Gurtschicht in dem Profilabschnitt in der Reifenradialrichtung außerhalb der Karkasse angeordnet ist und der Profilabschnitt ein Profilgummi (2G) aufweist, das in der Reifenradialrichtung außerhalb der Gurtschicht angeordnet ist und das eine Breite hat, die größer als jene der Gurtschicht ist, und
das äußere Ende der äußeren Schicht außerhalb eines in der Reifenachsrichtung äußeren Endes (7e) der Gurtschicht und innerhalb des Profilgummis positioniert ist.

5. Luftreifen gemäß Anspruch 4, wobei
das Profilgummi einen Profilgummikörper (2g), der außerhalb der Gurtschicht angeordnet ist, und Flügelgummis (2W) hat, die seitlich beider Enden des Profilgummikörpers angeordnet sind, die weicher als der Profilgummikörper sind und die im Wesentlichen dreieckige Querschnitte haben, und
das äußere Ende der äußeren Schicht in der Reifenradialrichtung innerhalb jedes Seitengummis positioniert ist.

6. Luftreifen gemäß einem der Ansprüche 1 bis 5, wobei
die Karkasse aus einem Karkassengewebe (6A) ausgebildet ist, das einen Körperabschnitt (6a), der sich von dem Profilabschnitt über die Seitenwandabschnitte zu den Wulstkernen erstreckt, und der aufgewickelte Abschnitte (6b) aufweist, die mit dem Körperabschnitt verbunden sind und jeweils von einer in der Reifenachsrichtung inneren Seite zu einer äußeren Seite um die Wulstkerne aufgewickelt sind, sodass sie sich in der Reifenradialrichtung auswärts erstrecken,
wobei die Wulstabschnitte Wulstscheitelgummis (8) aufweisen, die sich von den Wulstkernen in der Reifenradialrichtung zwischen dem Körperabschnitt und den aufgewickelten Abschnitten auswärts erstrecken, sodass sie konisch sind, und
die innere Schicht und die äußere Schicht in der Reifenachsrichtung außerhalb eines jeden aufgewickelten Abschnitts angeordnet sind, sodass sie von jedem Wulstscheitelgummi getrennt sind.

7. Luftreifen gemäß Anspruch 6, wobei das innere Ende in der Reifenradialrichtung der inneren Schicht nahe einem in der Reifenradialrichtung äußeren Ende (8o) eines jeden Wulstscheitelgummis positioniert ist.

8. Luftreifen gemäß einem der Ansprüche 1 bis 7, wobei
die Wulstabschnitte Clinchgummis (12) haben, die aus einem harten Gummi ausgebildet sind und die in der Reifenachsrichtung außerhalb der Karkasse in Kontakt jeweils mit den aufgewickelten Abschnitten angeordnet sind, und
jeder Clinchgummi eine Dicke hat, die von einem maximal vorragenden Abschnitt (14o) eines Felgenprotektors (14) in der Reifenradialrichtung auswärts allmählich abnimmt, und ein in der Reifenradialrichtung äußeres Ende (12o) eines jeden Clinchgummis ist nahe dem in der Reifenradialrichtung inneren Ende der inneren Schicht positioniert.

9. Luftreifen gemäß Anspruch 8, wobei
sich die äußere Schicht in der Reifenradialrichtung einwärts erstreckt, sodass sie einen in der Reifenachsrichtung äußeren Seitenabschnitt eines jeden Falzgummis bedeckt, und
ein in der Reifenradialrichtung innerer Endabschnitt (11I) der äußeren Schicht eine Dicke hat, die von dem inneren Ende der inneren Schicht in der Reifenradialrichtung einwärts allmählich abnimmt.

10. Luftreifen gemäß einem der Ansprüche 1 bis 9, wobei
Felgenprotektoren (14) an äußeren Flächen der Wulstabschnitte jeweils so vorgesehen sind, dass sie in der Reifenachsrichtung auswärts vorragen, und
ein in der Reifenradialrichtung inneres Ende (11i) der äußeren Schicht an dem maximal vorragenden Abschnitt (14o) eines jeden Felgenprotektors positioniert ist.

## Revendications

1. Bandage pneumatique (1) qui inclut une carcasse (6) s'étendant depuis une partie de bande de roulement (2) via des parties de flanc (3) jusqu'à des tringles de talon (5) de parties de talon (4), et des gommes de flanc (3G) disposées, dans les parties de flanc, vers l'extérieur de la carcasse dans une direction axiale du bandage, dans lequel
dans une section transversale méridienne du bandage incluant un axe de rotation du bandage qui est dans un état normal dans lequel le bandage est monté sur une jante normale et est gonflé à une pression intérieure normale, et aucune charge n'est appliquée au bandage,
les gommes de flanc incluent chacune une couche intérieure (10) s'étendant vers l'intérieur et vers l'extérieur dans une direction radiale du bandage, et une couche extérieure (11) disposée vers l'extérieur de la couche intérieure dans la direction axiale du bandage,
la couche extérieure est formée d'une composition de gomme ayant un module élastique complexe E* supérieur à celui de la couche intérieure,
la couche intérieure est formée d'un composé caoutchouteux ayant une tangente de perte tanδ inférieure à celle de la couche extérieure, et
la couche extérieure a une épaisseur qui est progressivement augmentée vers l'intérieur, dans la direction radiale du bandage, depuis la position de largeur maximale, au moins jusqu'à une extrémité intérieure (10i), dans la direction radiale du bandage, de la couche intérieure, **caractérisé en ce que**
la couche intérieure a une épaisseur qui est progressivement réduite vers l'intérieur, dans la direction radiale du bandage, depuis une position de largeur maximale (Pm) de chaque partie de flanc, et qui est progressivement diminuée vers l'extérieur, dans la direction radiale du bandage, depuis la position de largeur maximale, au moins jusqu'à une extrémité extérieure (11o), dans la direction radiale du bandage, de la couche extérieure.

2. Bandage pneumatique selon la revendication 1, dans lequel
une couche de ceinture (7) est disposée, dans la partie de bande de roulement, vers l'extérieur de la carcasse dans la direction radiale du bandage, et
une partie d'extrémité extérieure (10O), dans la direction radiale du bandage, de la couche intérieure est disposée dans une région d'extrémité de ceinture (13) entre la carcasse et la couche de ceinture.

3. Bandage pneumatique selon la revendication 2, dans lequel la partie d'extrémité extérieure de la couche intérieure a une épaisseur qui est progressivement réduite depuis l'extrémité extérieure, dans la direction radiale du bandage, de la couche extérieure.

4. Bandage pneumatique selon l'une quelconque des revendications 1 à 3, dans lequel
la couche de ceinture est disposée, dans la partie de bande de roulement, vers l'extérieur de la carcasse dans la direction radiale du bandage, et la partie de bande de roulement inclut un gomme de bande de roulement (2G) qui est disposée vers l'extérieur de la couche de ceinture dans la direction radiale du bandage et qui a une largeur supérieure à celle de la couche de ceinture, et
l'extrémité extérieure de la couche extérieure est positionnée vers l'extérieur d'une extrémité extérieure (7e) de la couche de ceinture dans la direction axiale du bandage et vers l'intérieur de la gomme de bande de roulement.

5. Bandage pneumatique selon la revendication 4, dans lequel
la gomme de bande de roulement inclut un corps de gomme de bande de roulement (2g) disposé à l'extérieur de la couche de ceinture, et des gommes d'aile (2W) qui sont disposées latéralement aux deux extrémités du corps de gomme de bande de roulement, qui sont plus tendres que le corps de gomme de bande de roulement, et qui ont des sections transversales grossièrement triangulaires, et
l'extrémité extérieure de la couche extérieure est positionnée vers l'intérieur de chaque gomme d'aile dans la direction radiale du bandage.

6. Bandage pneumatique selon l'une quelconque des revendications 1 à 5, dans lequel
la carcasse est formée d'une nappe de carcasse (6A) qui inclut une partie de corps (6a) qui s'étend depuis la partie de bande de roulement via les parties de flanc jusqu'aux tringles de talon, et des parties repliées (6b) qui sont reliées à la partie de corps, et qui sont repliées autour des tringles de talon, respectivement, d'un côté intérieur vers un côté extérieur dans la direction axiale du bandage, pour s'étendre vers l'extérieur dans la direction radiale du bandage,
les parties de talon incluent des gommes de sommet de talon (8) qui s'étendent depuis les tringles de talon vers l'extérieur dans la direction radiale du bandage, entre la partie de corps et les parties repliées, de façon à être coniques, et
la couche intérieure et la couche extérieure sont disposées vers l'extérieur de chaque partie repliée dans la direction axiale du bandage, pour être séparées de chaque gomme de sommet de talon.

7. Bandage pneumatique selon la revendication 6, dans lequel l'extrémité intérieure, dans la direction radiale du bandage, de la couche intérieure est positionnée proche d'une extrémité extérieure (8o), dans la direction radiale du bandage, de chaque gomme de sommet de talon.

8. Bandage pneumatique selon l'une quelconque des revendications 1 à 7, dans lequel
les parties de talon comportent des gommes de renfort (12) qui sont formées d'une gomme dure, et qui sont disposées, à l'extérieur de la carcasse dans la direction axiale du bandage, en contact avec les parties repliées, respectivement, et
chaque gomme de renfort a une épaisseur qui est progressivement réduite vers l'extérieur dans la direction radiale du bandage depuis une partie faisant saillie de manière maximale (14o) d'un protecteur de jante (14), et une extrémité extérieure (12o), dans la direction radiale du bandage, de chaque gomme de renfort est positionnée proche de l'extrémité intérieure, dans la direction radiale du bandage, de la couche intérieure.

9. Bandage pneumatique selon la revendication 8, dans lequel
la couche extérieure s'étend vers l'intérieur dans la direction radiale du bandage de façon à couvrir une partie latérale extérieure, dans la direction axiale du bandage, de chaque gomme de renfort, et
une partie d'extrémité intérieure (11I), dans la direction radiale du bandage, de la couche extérieure a une épaisseur qui est progressivement réduite vers l'intérieur dans la direction radiale du bandage depuis l'extrémité intérieure de la couche intérieure.

10. Bandage pneumatique selon l'une quelconque des revendications 1 à 9, dans lequel
des protecteurs de jante (14) sont prévus sur des surfaces extérieures des parties de talon, respectivement de façon à faire saillie vers l'extérieur dans la direction axiale du bandage, et
une extrémité intérieure (11i), dans la direction radiale du bandage, de la couche extérieure est positionnée au niveau de la partie faisant saillie de manière maximale (14o) de chaque protecteur de jante.
